(19) Europäisches Patentamt / European Patent Office / Office européen des brevets

(11) **EP 3 965 275 B1**

(12) **EUROPEAN PATENT SPECIFICATION**

(45) Date of publication and mention of the grant of the patent:
**19.06.2024 Bulletin 2024/25**

(21) Application number: **20194949.2**

(22) Date of filing: **08.09.2020**

(51) International Patent Classification (IPC):
**H02M 1/42** *(2007.01)* **H05B 45/355** *(2020.01)*
**H05B 45/38** *(2020.01)*

(52) Cooperative Patent Classification (CPC):
**H02M 1/4225; H05B 45/355; H05B 45/38;**
H02M 1/0009; H02M 1/0032; H02M 1/0058;
Y02B 70/10

(54) **POWER FACTOR CORRECTION CIRCUIT**

LEISTUNGSFAKTORKORREKTURSCHALTUNG

CIRCUIT DE CORRECTION DE FACTEUR DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2022 Bulletin 2022/10**

(73) Proprietor: **Tridonic GmbH & Co. KG**
**6851 Dornbirn (AT)**

(72) Inventors:
• **Auer, Hans**
**6850 Dornbirn (AT)**
• **Kucera, Clemens**
**6850 Dornbirn (AT)**

(74) Representative: **Rupp, Christian**
**Mitscherlich PartmbB**
**Patent- und Rechtsanwälte**
**Karlstraße 7**
**80333 München (DE)**

(56) References cited:
**DE-A1-102014 221 554** **US-A1- 2011 193 648**
**US-A1- 2016 204 700**

Processed by Luminess, 75001 PARIS (FR)

**Description**

TECHNICAL FIELD OF THE INVENTION

The invention relates to a power factor correction (PFC) circuit and to a method for setting an output voltage of a PFC circuit. The invention further relates to a driver for an LED load.

BACKGROUND OF THE INVENTION

Many LED drivers comprise a power factor correction (PFC) circuit that converts a supplied DC or AC voltage to a different power level. Typically, a PFC circuit, such as a boost PFC circuit, comprises a switch, which is subsequently opened and closed to discharge, respectively charge, an inductor of the circuit.

At low loads, it is known to operate such a PFC circuit in the so-called discontinuous conduction mode (DCM). Thereby, the switch is not switched on again immediately at the first local minimum of the voltage at the switch, respectively the first zero-crossing of the corresponding discharge current, but at a later point in time, i.e. the switch remains open for some time even if no current or only a minimal current is flowing.

If, for example, during an operation of dimmable luminaire, a lower light output is specified by a dimming setting, then, according to the prior art, a duty cycle of a pulse width modulation control signal of the switch is reduced at a constant frequency, resulting in a reduction of a switch on time ($t_{on}$) of the PFC switch. This can be done until a minimum value of the switch on time is set. If a further reduction of the light output is to be achieved, the switch off time ($t_{off}$) of the PFC switch typically needs to be increased.

The output current, respectively output voltage, of the PFC circuit in DCM depends on a ratio of the "non-current flow time", which is defined as the time in which no current flows through the inductor, to the "current flow time", which is defined as the time in which current is flowing, within a switching cycle. This ratio can be expressed by means of the so-called k-factor or k-value. To set the output current and output voltage of a PFC circuit with high resolution, it is known to use a continuous k-value distribution. However, this leads to difficulties especially at low output voltages, where the switch off time ($t_{off}$) needs to be adapted, since a continuous adaption of the switch off time is difficult to implement with current control technologies.

The document DE 10 2014 221 554 A1 discloses a driver for luminaires comprising a clocked circuit, such as a PFC circuit, which is controlled by a pulsed signal. If, thereby, a dimming range is above a threshold, i.e. at high loads, the pulsed signal is adapted such that only the switch on time of the clocked circuit is changed. However, if the dimming range is below the threshold, i.e. at low loads, the pulsed signal is adapted such that the switch off time is changed in a step-wise manner, wherein the switch on time is increased continuously if the switch off time is constant.

Thus, it is an objective to provide an improved PFC circuit and an improved method for setting an output voltage of a PFC circuit, which avoid the above-mentioned disadvantages.

SUMMARY OF THE INVENTION

The object of the present invention is achieved by the solution provided in the enclosed independent claims. Advantageous implementations of the present invention are further defined in the dependent claims.

The power factor correction (PFC) circuit of claim 1 achieves the advantage that an output voltage of the PFC circuit can be set with a high resolution. In particular, the output range of the PFC circuit is not limited by the number of entries in the lookup table, while, at the same time, the problems of a continuous k-value distribution can be avoided.

In particular, the PFC circuit is a boost PFC circuit. The PFC circuit can be integrated in a driver for luminaires, such as LEDs.

In the context of the invention, switching on the switch means making the switch conductive respectively closing the switch, and switching off the switch means making the switch nonconductive respectively opening the switch.

"Neighboring predefined multipliers" are predefined multipliers that are stored as adjacent entries in the lookup table.

In particular, the control unit is configured to determine the multiplier for the output voltage (or for an output current) based on a cycle of two neighboring predefined multipliers stored in the lookup table. The determined multiplier can be a variable multiplier, i.e. it can be adapted based on the set output voltage or output current.

The multiplier corresponds to a so-called k-factor or k-value, which depends on the ratio of the "non-current flow time" to the "current flow time" of the discharge current of the inductor. In particular, the switch off time of the switch ($t_{off}$) can be expressed as a function of the k-value (k), the switch on time ($t_{on}$) and the active time during which the discharge current is flowing ($t_{active}$):

$$t_{off} = k \cdot t_{active} - t_{on}$$

The time interval that is multiplied with the multiplier (k-factor) corresponds to the active time ($t_{active}$) during which energy is transmitted by the converter, including a raising and descending current phase.

The multiplier (k-value) controls the switch off time ($t_{off}$) of the switch and consequently the duty cycle, in particular at low loads where $t_{on}$ has reached a minimum. For example, at low PFC load, e.g. a reduced LED current, the DCM is used to provide a stable bus voltage from the PFC to a DC/DC stage, which controls the LED.

In an embodiment, the control unit is configured to determine the multiplier based on a mean value, in particular a time-averaged mean value, of the two or more different predefined multipliers in the cycle. This achieves the advantage that the multiplier can be determined in a simple and resource-saving way.

As noted above, each of the limited number of predefined multipliers stored in the lookup table is associated with a respective PFC load.

As noted above, the PFC loads of the predefined multipliers are stored in the lookup table as well. For example, the lookup table comprises two columns, wherein the first column contains load settings, wherein each load setting corresponds to a PFC load, and the second column contains the respective predefined multipliers (k-values) for each load setting.

The load settings can be dimming settings or other settings that require an adaption of the output voltage of the PFC circuit.

In addition to setting an output voltage, the control unit can also be configured to determine the multiplier to set a certain output current of the PFC circuit, e.g. a nominal LED current, based on the cycle of the two or more different, preferably neighboring, predefined multipliers stored in the lookup table.

As noted above, the control unit is configured to perform the cycle with the two or more predefined multipliers that are closest to an output load of the PFC.

In particular, the cycle is performed with the two predefined multipliers which's corresponding PFC load is closest to output load of the PFC. The output load of the PFC may correspond to a load which is currently connected to the PFC, e.g. an LED load at a certain dimming level. Using the multipliers that are closest to the respective output load can, thereby, help to keep the output voltage of the PFC constant. For instance, brightness fluctuations of the connected LED load can be prevented in this way. In particular, the output load of the PFC can defines a required output voltage of the PFC, which can be set based on the cycle.

As noted above, the control unit comprises a digital control oscillator, which is configured to perform a dithering of the predefined multipliers that are closest to the output load of the PFC. This achieves the advantage that the cycle of the predefined multipliers can efficiently be performed.

As noted above, the control unit is configured to perform the cycle of the two predefined multipliers based on the dithering of the multipliers. This achieves the advantage that the cycle of the predefined multipliers can efficiently be performed.

In particular, the cycle of the two predefined multipliers can be performed based on a load point of the PFC.

In an embodiment, the PFC circuit further comprises a memory, preferably a memory of the control unit, which is configured to store the lookup table.

In an embodiment, the control unit is configured to determine the zero-crossing of the discharge current based on a feedback signal. This achieves the advantage that the reaching of the zero-crossing can efficiently be determined.

The feedback signal can represent or correspond to a discharge voltage and/or a discharge current that is applied to the switch. The control unit can be configured to detect the zero-crossing of the discharge current when the feedback signal falls below a threshold value. The control unit may comprise a processing unit, such as a microcontroller or ASIC, for analyzing the feedback signal.

In an embodiment, the control unit is configured to control the switch by means of a pulse width modulated (PWM) control signal.

Preferably, the PWM control signal is based on a type of modulation in which a technical variable, e.g. an electrical voltage, varies between two values. Thereby, a pulse duty factor (pulse duration to period duration) of a rectangular pulse is modulated at constant frequency.

According to a second aspect, the invention relates to a driver for an LED load, wherein the driver comprises the PFC circuit according to the first aspect of the invention and output terminals for supplying the LED load.

The driver can further comprise a DC/DC converter, which is configured to receive the output voltage of the PFC circuit and to convert the output voltage to an LED supply voltage, which is forwarded to the LED load via the output terminals.

According to a third aspect, the invention relates to a method for setting an output voltage of a power factor correction (PFC) circuit, which is operated in a discontinuous conduction mode (DCM), wherein the PFC circuit comprises an inductor which is connected to a switch and which is configured to provide a discharge current, a capacitor which is connected to the inductor via a diode and which can be charged with said discharge current, wherein the switch is alternately switched on and off, and wherein the method comprises the steps of:

- storing for a limited number of predefined output loads of the PFC circuit, respective values of a controller output signal and corresponding predefined multipliers in a lookup table;
- performing a dithering, in accordance with a clock signal, of two or more different predefined multipliers stored in the lookup table that are closest to an output load of the PFC circuit in accordance with a controller output signal (X);
- determining a multiplier for said output voltage in accordance with the dithering of two or more different, preferably neighboring, predefined multipliers stored in the lookup table that are closest to the output load of the PFC circuit being defined by the controller output signal; and

-   setting a time duration of a cycle between two subsequent switch-on times of the switch as a product of said determined multiplier with a time interval, wherein the time interval ranges from a switch-on time of the switch to a time at which the discharge current reaches a zero-crossing.

This achieves the advantage that an output voltage of the PFC circuit can be set with a high resolution. In particular, the output range of the PFC circuit is not limited by the number of entries in the lookup table.

In an embodiment, the multiplier is determined based on a mean value, in particular a time-averaged mean value, of the two or more different predefined multipliers in the cycle. This achieves the advantage that the multiplier can be determined in a simple and resource-saving way.

As noted above, each of the limited number of predefined multipliers stored in the lookup table is associated with a respective PFC load.

As noted above, the cycle is performed with the two or more predefined multipliers that are associated with the predefined load settings that are closest to an output load of the PFC.

As noted above, the method further comprises the step of performing a dithering of the two or more multipliers that are closest to the output load of the PFC, wherein the cycle of the two or more predefined multipliers is performed based on said dithering of the multipliers.

The above description with regard to the PFC circuit according to the first aspect of the present invention is correspondingly valid for the method for setting an output voltage according to the third aspect of the invention.

BRIEF DESCRIPTION OF THE DRAWINGS

The invention will be explained in the followings together with the figures.

Fig. 1     shows a schematic diagram of a PFC circuit according to an embodiment;

Fig. 2     shows a schematic diagram of a pulse shape of a PFC circuit according to an embodiment;

Fig. 3     shows a schematic diagram of a lookup table according to an embodiment;

Fig. 4     shows a schematic diagram of a digital controlled oscillator that is connected to the lookup table of Fig. 3 according to an embodiment;

Fig. 5     shows a driver for an LED load according to an embodiment; and

Fig. 6     shows a method for setting an output voltage of a PFC circuit according to an embodiment.

DETAILED DESCRIPTION OF THE PREFERRED EMBODIMENTS

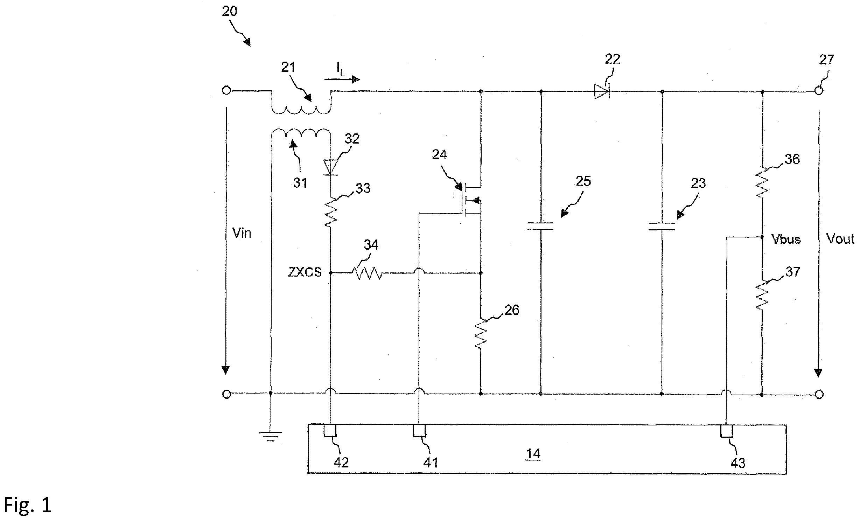

Fig. 1 shows a schematic diagram of a power factor correction (PFC) circuit 20 according to an embodiment of the invention.

The PFC circuit 20 is operable in a discontinuous conduction mode (DCM) and comprises an inductor 21 that is configured to provide a discharge current, a capacitor 23 which is connected to the inductor 21 via a switch 24 and which can be charged with said discharge current, and a control unit 14 which is configured to alternately switch 24 the switch on and off.

In the discontinuous conduction mode, the control unit 14 is configured to set a time duration between two subsequent switch-on times of the switch 24 as a product of a multiplier with a time interval, wherein the time interval ranges from a switch-on time of the switch 24 to a time at which the discharge current reaches a zero-crossing. Thereby, a limited number of predefined multipliers are stored in a lookup table, wherein to set an output voltage of the PFC circuit 20, the control unit 14 is configured to determine the multiplier for said output voltage based on a cycle of two or more different, preferably neighboring, predefined multipliers stored in the lookup table.

The discharge current refers to the current released by the inductor at discharge (if the switch is closed). In particular, a discharge voltage is generated during discharge, which can be applied to the switch 24.

The PCF circuit 20 can be supplied with an input voltage $V_{in}$ e.g. in the form of an AC voltage.

The input voltage $V_{in}$ can be a rectified mains voltage from a rectifier (not shown). The input voltage $V_{in}$ is fed to the inductor 21, which can be a charging coil. The Inductor 21 is connected in series to a diode 22 between the input and output terminals 27 of the PFC circuit 20 connected. The diode 22 can be a flyback diode. The capacitor 23 can be connected between the anode of the flyback diode 22 and ground, and can, thus, be charged by the discharge current of the inductor 21 via the diode 22. As output, the PFC circuit 20 can provide an output voltage $V_{out}$, in particular a DC voltage to an LED load.

An additional capacitor 25 can be connected between the inductor 21 and ground and in parallel to a series connection, which is formed by the switch 24 and a resistor 26. The capacitor 25 can be connected to the same terminal of diode 22 as the inductor 21.

The switch 24, which is arranged between the inductor 21 and the diode 22, can be a controllable electronic switch, which is designed, for example, as a field effect transistor (FET), in particular as a MOSFET. The switch 24 can be connected to ground via the resistor 26, which can serve as a shunt resistor. The switch 24 can be switched to the on-state and the off-state by the control unit 14 by means of a pulsed signal.

The control unit 14 can have a corresponding output interface 41 for providing a control signal, e.g. for directly or indirectly controlling a gate voltage of the switch 24 (e.g. via a driver circuit). Preferably, the control signal is a pulse width modulated (PWM) control signal.

Preferably, when the switch 24 is switched on, i.e. closed, the inductor 21 is connected to ground and the diode 22 is blocking, so that the inductor 21 is charged. When the switch 24 is switched off, i.e. open, the diode 22 becomes conductive so that the inductor 21 can discharge via the diode 22 into the charging capacitor 23, such that the energy that is stored in inductor 21 is transferred to the charging capacitor 23.

Preferably, the control unit is configured to determine the zero-crossing of the discharge current based on a feedback signal (ZXCS). For example, the control unit can be configured to receive the feedback signal, which represents a discharge voltage, and/or discharge current of the inductor 21. The control unit can comprise an input interface 42 for receiving said feedback signal and an internal processing unit for determining the zero-crossing of the discharge current based on the feedback signal.

The PFC can comprise a detection circuit to provide the feedback signal. The detection circuit can comprise a winding 31 or small coil 31, which is inductively coupled to the inductor 21. The winding 31 can be connected via a diode 32 and a resistor 33 to a node, which is connected via a further resistor 34 to a further node between the switch 24 and resistor 26. For example, the feedback signal at the input interface 42 of the control unit 14 shows a zero crossings of the current $I_L$ in the inductor 21 in time periods when the switch 24 is switched off.

Furthermore, the control unit 14 can be configured to control the operation of the switch 24 based on different measured variables. For example, the control unit 14 can detect the output voltage as a bus voltage $V_{bus}$ via a further input interface 43 using a voltage divider with resistors 36, 37.

Preferably, the control unit 14 further comprise a memory (not shown) for storing the lookup table. The memory can be a flash memory, e.g. of a microcontroller.

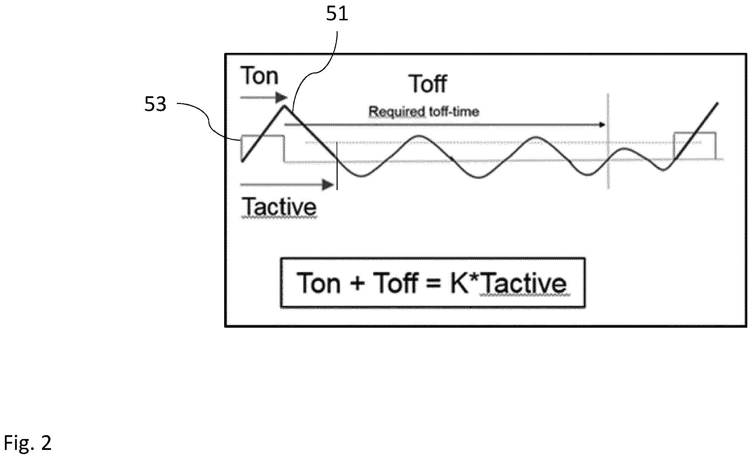

Fig. 2 shows a schematic diagram of a pulse shape of the PFC circuit 10 according to an embodiment.

In particular, Fig. 2 shows the PFC choke current 51 (discharge current $I_L$ of the inductor 21) and different switch configurations 53 as a function of time. At switch-on (start of first $t_{on}$) the current 51 rises linearly and, then, drops off at switch off (start of $t_{off}$) until it reaches a first zero-crossing. The active time during which the discharge current is flowing and until reaching the first zero-crossing is called $t_{active}$.

To achieve certain low output voltages, the switch 24 is not switched on directly after reaching the zero-crossing. The switch off time of the switch ($t_{off}$) can be expressed as a function of the multiplier (k), which is called k-value, the switch on time ($t_{on}$) and the active time during which the discharge current is flowing ($t_{active}$):

$$t_{off} = k \cdot t_{active} - t_{on}$$

Preferably, the k-value corresponds to the multiplier that is used by the control unit 14 to set a time duration between two subsequent switch-on times and $t_{active}$ corresponds to the time interval from the switch-on time of the switch 24 to the time at which the discharge current 51 reaches the zero-crossing. The multiplier (k-value) can control the switch off time ($t_{off}$) of the switch and consequently the duty cycle, in particular at low loads where $t_{on}$ has reached a minimum. In this way, the output voltage of the PFC circuit 20 can further be reduced even if a minimum switch on time ($t_{on}$) has been reached.

Fig. 2 shows that the current 51 can still fluctuate to some extend after reaching the first zero-crossing. The control unit 14 can be configured to switch on the switch at the next positive zero-crossing after waiting the required $t_{off}$ time that is determined by the k-value.

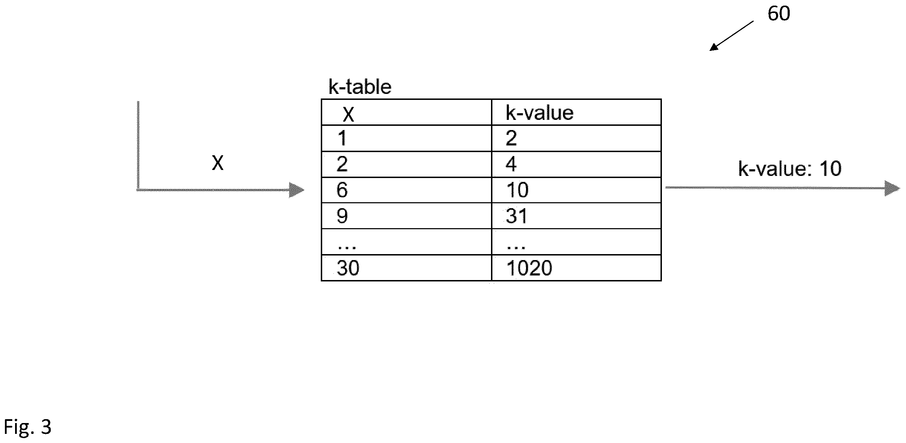

Fig. 3 shows a schematic diagram of the lookup table 60 according to an embodiment of the invention.

The lookup table 60 comprises a list of predefined multipliers in the form of k-values.

Each predefined multiplier is associated with a controller output signal (X), which is also stored in the lookup table.

The controller output signal (X) defines a predefined PFC load, which represents an output voltage of the PFC circuit. For example, the predefined PFC loads are dimming settings or other settings that requires an adaption of the output voltage of the PFC circuit 20. The PFC loads can be stored as load settings in the lookup table. In particular, each k-value roughly equals the inverse of the control signal variable (X), according to: k ~ 1 / X. Storing k-values and the associated control signal variables (X) in a lookup table provides the advantage that that the k-value for certain X variables are immediately available and do not need to be calculated separately.

The controller output signal (X) is an output of the control unit 14, which comprises, for instance, a digital controller for supplying X. The lookup table 60 is configured to receive the controller output signal (X) as an input and to provide the corresponding k-value as an output.

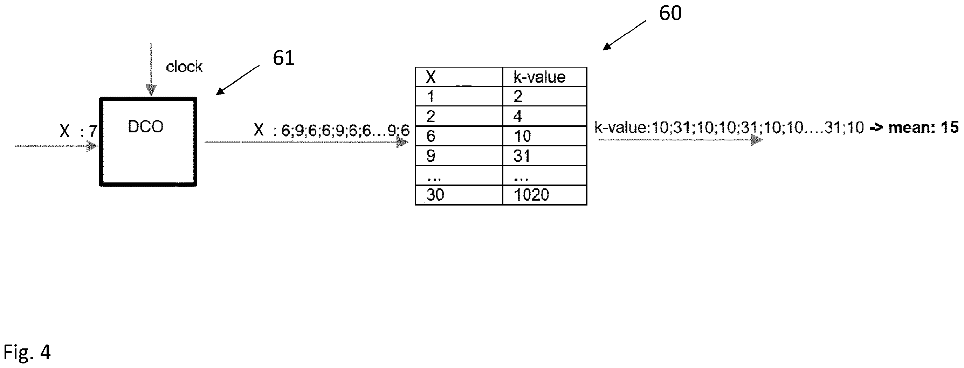

Fig. 4 shows a schematic diagram of a digital controlled oscillator 61 that is connected to the lookup table 60 of Fig. 3 according to an embodiment of the invention.

The digital controlled oscillator 61, e.g. a delta-sigma-modulator, can be comprised in the control unit 14 of the PFC circuit 20. The oscillator 61 is configured to receive a controller output signal, e.g. a dimming signal, and a clock signal. If the controller output signal received by the oscillator 61 lies between two X-signals that are stored in the lookup table 60, the oscillator 61 is configured to perform a dithering, according to the clock signal, of the two X-values that are closest to the controller output signal received by the oscillator 61. In particular, the oscillator 61 is configured to perform the dithering if the received X-value lies between two successive entries in the lookup table 60. In the example shown in Fig. 4, the oscillator 61 receives an X-value of 7, and dithers between the X-values 6 and 9 that are stored in the lookup table. Thereby, the clock signal may provide a period time for the dithering, which is smaller than a characteristic time of a system-filter period at the output.

The oscillator 61 is configured to provide the dithered X-signal to the lookup table 60, which in turn outputs a dithered k-value signal according to the dithering of the X-signal. The dithered X-signals can be supplied to the lookup table by a processing unit and the resulting dithered k-value signal can be read out by said processing unit. The processing unit can be a microprocessor or an ASIC and may be comprised in the control unit 14.

In particular, the dithered k-value signal corresponds to a cycle of the two k-values that are associated with the predefined X-values that are closest to the set X value. In other words, the control unit 14 is configured to perform the cycle of the two k-values based on the dithering of the associated predefined PFC loads, respectively stored load settings (X). Usually, the k-values used for the cycle are neighboring values that are stored as adjacent entries in the lookup table. Furthermore, the cycle can be performed with two or more k-values.

As shown in Fig. 4, the resulting k-value that is used to control the operation of the switch 24 can be calculated as a time-averaged mean value of the two or more different k-values in the cycle. In this way, an interpolation between successive entry-data points of the lookup table 60 or a mixing of said data points can be determined and the resolution of the available k-values can be increased.

In Fig. 4, the cycle comprises the k-values 10 and 31, wherein the value 10 appears more frequent in the cycle, and wherein the resulting k-value is 15. The mean value of the cycle can be calculated by the processing unit, e.g. the microcontroller or ASIC.

Preferably, this leads to a behavior of the PFC circuit 20 in which, in order to achieve a given nominal output voltage (or output current), the control unit 14 controls the operation of the PFC circuit 20 in the discontinuous conduction mode, such that the switching cycle period jumps, according to the calculated cycle, between two different cycle time periods (k-values). By mixing, i.e. applying the two time periods with the adaptive duty cycle, the suitable k-value for setting the output voltage can be determined with high resolution based on the list of discrete k-values, i.e. without using a continuous k-value spectrum. Thereby, the number of possible k-values that are used to control the switch on and off times is no longer limited by the number of k-values stored in the lookup table 60. In particular, the jumps between different cycle time periods may occur at constant given nominal LED voltage/current (LED load). Furthermore, the k-value dithering may lead to a higher frequency at which the switch off time $t_{off}$ can be changed. In addition, the bus voltage of the PFC circuit 20 can be improved.

According to an alternative not falling within the scope of the claims, an interpolation algorithm, e.g. a linear interpolation, between succeeding table-entries might be performed to determine the k-value. However, such an approach would be more time and resource consuming than using the above cycle of k-values.

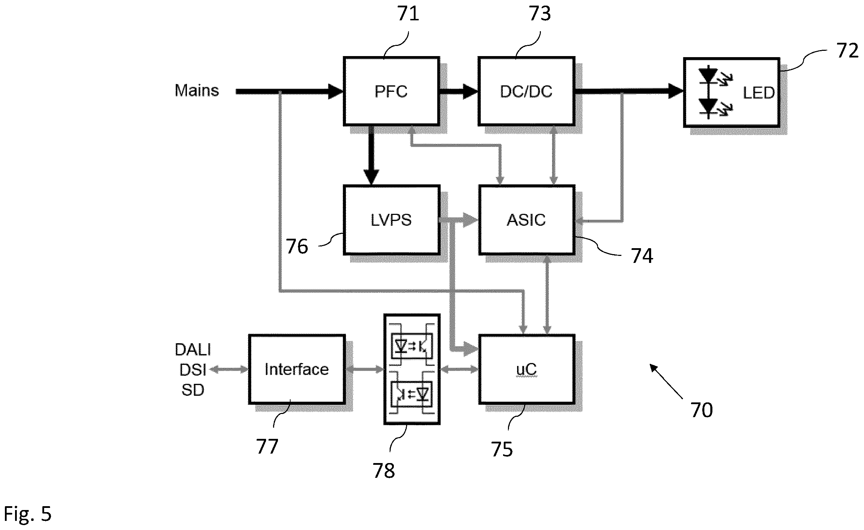

Fig. 5 shows a driver 70 an LED load 72 according to an embodiment.

The driver 10 in Fig. 5 comprises a PFC circuit 71, which can correspond to the circuit 20 shown in Fig. 1 or to a component thereof.

The driver 10 may further comprise an input interface for receiving a mains voltage (not shown), which is forwarded to the PFC circuit 71 and a DC/DC converter 73 for converting an output voltage of the PFC circuit 71 and forwarding said converted output voltage to the LED load 72 via output terminals of the driver 70. The LED load 72 can be a dimmable LED luminaire, which can comprise a plurality of individual LEDs. For example, at low PFC load, e.g. a reduced LED current, the DCM is used to provide a stable bus voltage from the PFC to the DC/DC converter 73, which controls the LED.

The driver 500 in Fig. 5 further comprises a low voltage power supply 76 which can be configured to supply integrated circuits of the driver 70, e.g. the ASIC 74 or microcontroller 75. In particular, the ASIC 74 and/or microcontroller 75 are comprised in the control unit 14 that is shown in Fig. 1. The driver 70 further comprises an interface 77, e.g. a DALI, a DSI (Display Serial Interface) or an SD interface, which is optically isolated from the rest of the microcontroller 70. Signals can be exchanged between the DALI interface 77 and the rest of the microcontroller 70 via two optocouplers 78. For example, the lookup table can be uploaded to a memory of the driver 70 via the interface 77.

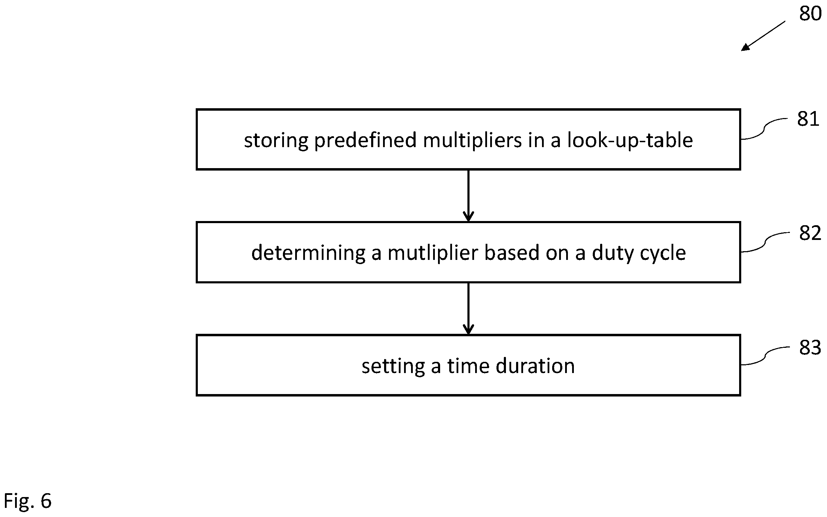

Fig. 6 shows a method 80 for setting the output voltage of the PFC circuit 20 according to an embodiment.

Thereby, the PFC circuit 20 is operated in the discontinuous conduction mode (DCM) and comprises the inductor 21, which is configured to provide a discharge current, the capacitor 23 which is connected to the inductor via the switch 24 and which can be charged with said discharge current, wherein the switch 24 is alternately switched on and off. The method 80 comprises the steps of:

- storing 81 a limited number of predefined multipliers in the lookup table 60;
- determining 82 a multiplier for said output voltage based on a cycle of two or more different, preferably neighboring, predefined multipliers stored in the lookup table 60; and
- setting 83 a time duration between two subsequent switch-on times of the switch 24 as a product of said determined multiplier with a time interval, wherein the time interval ranges from a switch-on time of the switch 24 to a time at which the discharge current reaches a zero-crossing.

Preferably, the multiplier is determined based on the mean value, in particular the time-averaged mean value, of the two or more different predefined multipliers in the cycle. In particular, the predefined multipliers correspond to k-values that are stored in the lookup table 60.

Each of the limited number of predefined multipliers, i.e. k-values, stored in the lookup table is associated with a respective PFC load. Each respective PFC load can, thereby, represents an output voltage of the PFC circuit. In particular, the PFC loads can be stored as load settings in the lookup table, wherein each load setting is a control signal variable (X), which can correspond to a dimming setting of the PFC circuit 20.

The cycle can be performed with the two or more predefined multipliers (k-values) that are closest to an output load of the PFC. In particular, the output load of the PFC corresponds to a current collected load and defines a required output voltage to be set.

The method 80 comprises the further step of: performing a dithering of the two or more multipliers (k-values) that are closest to the output load of the PFC. The cycle of the two or more predefined multipliers (k-values) is performed based on said dithering.

In particular, the cycle of the two or more predefined multipliers (k-values) is performed based a said dithering of PFC load settings, i.e. PFC loads, that are stored in the lookup table.

**Claims**

1. A power factor correction, PFC, circuit (20), which is operable in a discontinuous conduction mode, DCM, comprising:

   an inductor (21) which is connected to a switch (24) and which is configured to provide a discharge current ($I_L$);
   a capacitor (23) which is connected to the inductor (21) via a diode (22) and which can be charged with said discharge current ($I_L$);and
   a control unit (14) which is configured to alternately switch the switch (24) on and off;
   in order to control a duty cycle for achieving a desired output voltage (Vout) of the PFC circuit (20) in DCM, the control unit (14) is configured to set a time duration of a cycle between two subsequent switch-on times of the switch (24) as a product of a multiplier (k) with a time interval ($t_{active}$), wherein the time interval ($t_{active}$) ranges from a switch-on time ($t_{on}$) of the switch (24) to a time at which the discharge current ($I_L$) reaches a zero-crossing;
   **characterized in that** the power factor correction circuit (20) further comprises:

   a lookup table (60) configured to store, for a limited number of predefined output load settings representing output voltages of the PFC circuit (20), a list of predefined multipliers (k) and associated values of a controller output signal (X);
   a digital controlled oscillator (61) which is configured to receive the controller output signal (X) and to perform, if the received value of the controller output signal (X) lies between two values of the controller output signal that are stored in the lookup table (60), a dithering, according to a clock signal, of the two values of the controller output signal stored in the lookup table that are closest to the controller output signal received by the oscillator (61);
   wherein said lookup table (60) is configured to output, for each value of the dithered controller output signal received from said digital controlled oscillator (61), an associated predefined multiplier (k), thereby outputing a dithered multiplier signal;
   wherein the control unit (14) is configured to control the operation of the PFC circuit (20) based on the dithered multiplier signal.

2. The PFC circuit (20) of claim 1, wherein the control unit (14) is configured to determine the multiplier (k) based on a mean value, in particular a time-averaged mean value, of the two different predefined multipliers (k) in the cycle.

3. The PFC circuit (20) of any one of the preceding claims, further comprising a memory, preferably a memory of the control unit (14), which is configured to store the lookup table (60).

4. The PFC circuit (20) of any one of the preceding claims, wherein the control unit (14) is configured to determine the zero-crossing of the discharge current ($I_L$) based on a feedback signal (ZXCS).

5. The PFC circuit (20) of any one of the preceding claims, wherein the control unit (14) is configured to control the switch (24) by means of a pulse width modulated, PWM, control signal.

6. A driver (70) for an LED load (72), wherein the driver (70) comprises the PFC circuit (20) of any one of the preceding claims and output terminals for supplying the LED load (72).

7. A method (80) for setting an output voltage ($V_{out}$) of a power factor correction, PFC, circuit (20), which is operated in a discontinuous conduction mode, DCM, wherein the PFC circuit (20) comprises an inductor (21) which is connected to a switch (24) and which is configured to provide a discharge current ($I_L$), a capacitor (23) which is connected to the inductor (21) via a diode (22) and which can be charged with said discharge current ($I_L$), wherein the switch (24) is alternately switched on and off, and wherein the method (80) comprises the steps of:

- storing (81) for a limited number of predefined output loads of the PFC circuit (20), respective values of a controller output signal (X) and corresponding predefined multipliers (k) in a lookup table (60);
- performing a dithering, in accordance with a clock signal, of two or more different predefined multipliers (k) stored in the lookup table (60) that are closest to an output load of the PFC circuit (20) in accordance with a controller output signal (X);
- determining (82) a multiplier (k) for said output voltage ($V_{out}$) in accordance with the dithering of the two or more different predefined multipliers (k) stored in the lookup table (60) that are closest to the output load of the PFC circuit (20) being defined by the controller output signal (X); and
- setting (83) a time duration of a cycle between two subsequent switch-on times of the switch (24) as a product of said determined multiplier (k) with a time interval ($t_{active}$), wherein the time interval ($t_{active}$) ranges from a switch-on time ($t_{on}$) of the switch (24) to a time at which the discharge current ($I_L$) reaches a zero-crossing.

8. The method (80) of claim 7, wherein the multiplier is determined based on a mean value, in particular a time-averaged mean value, of the two or more different predefined multipliers (k) in the cycle.

**Patentansprüche**

1. Leistungsfaktorkorrekturschaltung, PFC-Schaltung, (20), die in einem diskontinuierlichen Leitungsmodus, DCM, betriebsfähig ist, umfassend:

einen Induktor (21), der mit einem Schalter (24) verbunden ist und der konfiguriert ist, um einen Entladestrom ($I_L$) bereitzustellen;
einen Kondensator (23), der mit dem Induktor (21) über eine Diode (22) verbunden ist und der mit dem Entladestrom ($I_L$) geladen werden kann; und
eine Steuereinheit (14), die konfiguriert ist, um den Schalter (24) abwechselnd ein- und auszuschalten;
um einen Arbeitszyklus zum Erzielen einer gewünschten Ausgangsspannung (Vout) der PFC-Schaltung (20) in dem DCM zu steuern, ist die Steuereinheit (14) konfiguriert, um eine Zeitdauer eines Zyklus zwischen zwei aufeinanderfolgenden Einschaltzeiten des Schalters (24) als ein Produkt eines Multiplikators (k) mit einem Zeitintervall ($t_{active}$) einzustellen, wobei das Zeitintervall ($t_{active}$) von einer Einschaltzeit ($t_{on}$) des Schalters (24) bis zu einer Zeit reicht, zu der der Entladestrom ($I_L$) einen Nulldurchgang erreicht; **dadurch gekennzeichnet, dass** die Leistungsfaktorkorrekturschaltung (20) ferner umfasst:

eine Nachschlagetabelle (60), die konfiguriert ist, um für eine begrenzte Anzahl von vordefinierten Ausgangslasteinstellungen, die Ausgangsspannungen der PFC-Schaltung (20) darstellen, zu speichern,
eine Liste von vordefinierten Multiplikatoren (k) und zugehörigen Werten eines Steuerungsausgangssignals (X);
einen digital gesteuerten Oszillator (61), der konfiguriert ist, um das Steuerungsausgangssignal (X) zu empfangen und, falls der empfangene Wert des Steuerungsausgangssignals (X) zwischen zwei Werten des Steuerungsausgangssignals, die in der Nachschlagetabelle (60) gespeichert sind, liegt, ein Dithering, gemäß einem Taktsignal, der zwei Werte des Steuerungsausgangssignals durchzuführen, die in der Nachschlagetabelle gespeichert sind, die dem Steuerungsausgangssignal, das durch den Oszillator (61) empfangen wird, am nächsten sind;
wobei die Nachschlagetabelle (60) konfiguriert ist, um für jeden Wert des geditherten Steuerungsausgangssignals, das von dem digital gesteuerten Oszillator (61) empfangen wird, einen zugehörigen vordefinierten Multiplikator (k) auszugeben, wobei dadurch ein gedithertes Multiplikatorsignal ausgegeben wird;
wobei die Steuereinheit (14) konfiguriert ist, um den Betrieb der PFC-Schaltung (20) basierend auf dem geditherten Multiplikatorsignal zu steuern.

2. PFC-Schaltung (20) nach Anspruch 1, wobei die Steuereinheit (14) konfiguriert ist, um den Multiplikator (k) basierend auf einem Durchschnittswert, insbesondere einem zeitlich gemittelten Durchschnittswert, der zwei verschiedenen vordefinierten Multiplikatoren (k) in dem Zyklus zu bestimmen.

3. PFC-Schaltung (20) nach einem der vorstehenden Ansprüche, ferner umfassend einen Speicher, vorzugsweise einen Speicher der Steuereinheit (14), der konfiguriert ist, um die Nachschlagetabelle (60) zu speichern.

4. PFC-Schaltung (20) nach einem der vorstehenden Ansprüche, wobei die Steuereinheit (14) konfiguriert ist, um den Nulldurchgang des Entladestroms ($I_L$) basierend auf einem Rückkopplungssignal (ZXCS) zu bestimmen.

5. PFC-Schaltung (20) nach einem der vorstehenden Ansprüche, wobei die Steuereinheit (14) konfiguriert ist, um den Schalter (24) mittels eines pulsweitenmodulierten, PWM, Steuersignals zu steuern.

6. Treiber (70) für eine LED-Last (72), wobei der Treiber (70) die PFC-Schaltung (20) nach einem der vorstehenden Ansprüche und Ausgangsanschlüsse zum Versorgen der LED-Last (72) umfasst.

7. Verfahren (80) zum Einstellen einer Ausgangsspannung ($V_{out}$) einer Leistungsfaktorkorrekturschaltung, PFC-Schaltung, (20), die in einem diskontinuierlichen Leitungsmodus, DCM, betrieben wird, wobei die PFC-Schaltung (20) einen Induktor (21), der mit einem Schalter (24) verbunden ist und der konfiguriert ist, um einen Entladestrom ($I_L$) bereitzustellen, einen Kondensator (23), der mit dem Induktor (21) über eine Diode (22) verbunden ist und der mit dem Entladestrom ($I_L$) geladen werden kann, umfasst, wobei der Schalter (24) abwechselnd ein- und ausgeschaltet wird und wobei das Verfahren (80) die Schritte umfasst:

    - Speichern (81), für eine begrenzte Anzahl von vordefinierten Ausgangslasten der PFC-Schaltung (20), jeweiliger Werte eines Steuerungsausgangssignals (X) und entsprechender vordefinierter Multiplikatoren (k) in einer Nachschlagetabelle (60);
    - Durchführen eines Ditherings, gemäß einem Taktsignal, von zwei oder mehr verschiedenen vordefinierten Multiplikatoren (k), die in der Nachschlagetabelle (60) gespeichert sind, die einer Ausgangslast der PFC-Schaltung (20) am nächsten sind, gemäß einem Steuerungsausgangssignal (X);
    - Bestimmen (82) eines Multiplikators (k) für die Ausgangsspannung ($V_{out}$) gemäß dem Dithering der zwei oder mehr verschiedenen vordefinierten Multiplikatoren (k), die in der Nachschlagetabelle (60) gespeichert sind, die der Ausgangslast der PFC-Schaltung (20), die durch das Steuerungsausgangssignal (X) definiert ist, am nächsten sind; und
    - Einstellen (83) einer Zeitdauer eines Zyklus zwischen zwei aufeinanderfolgenden Einschaltzeiten des Schalters (24) als ein Produkt des bestimmten Multiplikators (k) mit einem Zeitintervall ($t_{active}$), wobei das Zeitintervall ($t_{active}$) von einer Einschaltzeit ($t_{on}$) des Schalters (24) bis zu einer Zeit reicht, zu der der Entladestrom ($I_L$) einen Nulldurchgang erreicht.

8. Verfahren (80) nach Anspruch 7, wobei der Multiplikator basierend auf einem Durchschnittswert, insbesondere einem zeitlich gemittelten Durchschnittswert, der zwei oder mehr verschiedenen vordefinierten Multiplikatoren (k) in dem Zyklus bestimmt wird.

**Revendications**

1. Circuit (20) de correction du facteur de puissance, PFC, qui fonctionne en mode de conduction discontinue, DCM, comprenant :

    un inducteur (21) qui est connecté à un commutateur (24) et qui est configuré pour fournir un courant de décharge ($I_L$) ;
    un condensateur (23) qui est connecté à l'inducteur (21) par l'intermédiaire d'une diode (22) et qui peut être chargé avec ledit courant de décharge ($I_L$) ; et
    une unité de commande (14) qui est configurée pour activer et désactiver alternativement le commutateur (24) ;
    afin de commander un cycle opératoire pour atteindre une tension de sortie souhaitée ($V_{out}$) du circuit PFC (20) en DCM, l'unité de commande (14) est configurée pour définir la durée d'un cycle entre deux temps de mise en circuit subséquents du commutateur (24) en tant que produit d'un multiplicateur (k) avec un intervalle de temps ($t_{active}$), dans lequel l'intervalle de temps ($t_{active}$) va d'un temps de mise en circuit ($t_{on}$) du commutateur (24) à un temps auquel le courant de décharge ($I_L$) atteint un passage à zéro ;
    **caractérisé en ce que** le circuit (20) de correction du facteur de puissance comprend en outre :

    une table de recherche (60) configurée pour stocker, pour un nombre limité de réglages de charge de sortie prédéfinis représentant les tensions de sortie du circuit PFC (20), une liste de multiplicateurs prédéfinis (k) et les valeurs associées d'un signal de sortie du dispositif de commande (X) ;
    un oscillateur numérique commandé (61) configuré pour recevoir le signal de sortie du dispositif de commande (X) et pour effectuer, si la valeur reçue du signal de sortie du dispositif de commande (X) se situe entre deux valeurs du signal de sortie du dispositif de commande qui sont stockées dans la table de recherche (60), une juxtaposition, en fonction d'un signal d'horloge, des deux valeurs du signal de sortie du dispositif de commande stockées dans la table de recherche qui sont les plus proches du signal de sortie du dispositif de commande reçu par l'oscillateur (61) ;

dans lequel ladite table de recherche (60) est configurée pour émettre, pour chaque valeur du signal de sortie de dispositif de commande juxtaposé reçu dudit oscillateur numérique commandé (61), un multiplicateur prédéfini associé (k), émettant ainsi un signal multiplicateur juxtaposé ;

dans lequel l'unité de commande (14) est configurée pour commander le fonctionnement du circuit PFC (20) sur la base du signal multiplicateur juxtaposé.

2. Circuit PFC (20) selon la revendication 1, dans lequel l'unité de commande (14) est configurée pour déterminer le multiplicateur (k) sur la base d'une valeur moyenne, en particulier une valeur moyenne moyennée dans le temps, des deux multiplicateurs 00 prédéfinis différents dans le cycle.

3. Circuit PFC (20) selon l'une quelconque des revendications précédentes comprenant en outre une mémoire, de préférence une mémoire de l'unité de commande (14), qui est configurée pour stocker la table de recherche (60).

4. Circuit PFC (20) selon l'une quelconque des revendications précédentes, dans lequel l'unité de commande (14) est configurée pour déterminer le passage à zéro du courant de décharge ($I_L$) sur la base d'un signal de retour (ZXCS).

5. Circuit PFC (20) selon l'une quelconque des revendications précédentes, dans lequel l'unité de commande (14) est configurée pour commander le commutateur (24) au moyen d'un signal de commande à modulation de largeur d'impulsion (PWM).

6. Pilote (70) pour une charge DEL (72), dans lequel le pilote (70) comprend le circuit PFC (20) de l'une des revendications précédentes et des bornes de sortie pour alimenter la charge DEL (72).

7. Procédé (80) de réglage d'une tension de sortie ($V_{out}$) d'un circuit (20) de correction du facteur de puissance, PFC, fonctionnant en mode de conduction discontinue, DCM, dans lequel le circuit PFC (20) comprend un inducteur (21) qui est connecté à un commutateur (24) et qui est configuré pour fournir un courant de décharge ($I_L$), un condensateur (23) qui est connecté à l'inducteur (21) par l'intermédiaire d'une diode (22) et pouvant être chargé avec ledit courant de décharge ($I_L$), dans lequel le commutateur (24) est alternativement activé et désactivé, et dans lequel le procédé (80) comprend les étapes consistant à :

- stocker (81) pour un nombre limité de charges de sortie prédéfinies du circuit PFC (20), les valeurs respectives d'un signal de sortie du dispositif de commande (X) et les multiplicateurs prédéfinis correspondants (k) dans une table de recherche (60) ;

- effectuer une juxtaposition, conformément à un signal d'horloge, de deux multiplicateurs prédéfinis différents (k) ou plus, stockés dans la table de recherche (60), qui sont les plus proches d'une charge de sortie du circuit PFC (20) conformément à un signal de sortie du dispositif de commande (X) ;

- déterminer (82) un multiplicateur (k) pour ladite tension de sortie ($V_{out}$) en fonction de la juxtaposition des deux multiplicateurs prédéfinis différents (k) ou plus stockés dans la table de recherche (60) qui sont les plus proches de la charge de sortie du circuit PFC (20) définie par le signal de sortie du dispositif de commande (X) ; et

- définir (83) une durée d'un cycle entre deux temps de mise en circuit ultérieurs du commutateur (24) en tant que produit dudit multiplicateur déterminé (k) avec un intervalle de temps ($t_{active}$), dans lequel l'intervalle de temps ($t_{active}$), va d'un temps de mise en circuit ($t_{on}$) du commutateur (24) à un temps auquel le courant de décharge ($I_L$) atteint un passage à zéro.

8. Procédé (80) selon la revendication 7, dans lequel le multiplicateur est déterminé sur la base d'une valeur moyenne, en particulier d'une valeur moyenne moyennée dans le temps, des deux multiplicateurs prédéfinis différents (k) ou plus dans le cycle.

Fig. 1

51

53

Ton

Toff

Required toff-time

Tactive

$$Ton + Toff = K \cdot Tactive$$

Fig. 2

60

k-value: 10

k-table

| X | k-value |
|---|---------|
| 1 | 2 |
| 2 | 4 |
| 6 | 10 |
| 9 | 31 |
| ... | ... |
| 30 | 1020 |

X

Fig. 3

EP 3 965 275 B1

clock

61

60

X : 7

DCO

X : 6;9;6;6;9;6;6...9;6

| X | k-value |
|---|---------|
| 1 | 2 |
| 2 | 4 |
| 6 | 10 |
| 9 | 31 |
| ... | ... |
| 30 | 1020 |

k-value:10;31;10;10;31;10;10....31;10 -> mean: 15

Fig. 4

Fig. 5

EP 3 965 275 B1

80

| storing predefined multipliers in a look-up-table | 81 |

↓

| determining a mutliplier based on a duty cycle | 82 |

↓

| setting a time duration | 83 |

Fig. 6

**EP 3 965 275 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102014221554 A1